# DEMANDE DE BREVET EUROPEEN

(11) **EP 0 538 082 A1**
(43) Date de publication de la demande: **21.04.1993**
(21) Numéro de dépôt: 92402539.8
(22) Date de dépôt: 16.09.1992
(51) Int. Cl.: B60S 5/04

(54) **Dispositif pour le gonflage de pneumatiques en libre service**

(30) Priorité: 15.10.1991 FR 9112691
(71) Demandeur: Puisset, Roland, F-92700 Colombes (FR); Adam, Désiré, F-92700 Colombes (FR)
(72) Inventeur: Puisset, Roland, F-92700 Colombes (FR); Adam, Désiré, F-92700 Colombes (FR)
(74) Mandataire: Netter, André

(57) **Abrégé**

Le tuyau de gonflage est enroulé sur un tambour (5) à l'intérieur d'un boîtier fermé par une porte coulissante (12). Lorsqu'une pièce de monnaie est introduite dans un mécanisme de consigne, un électro-aimant (20) libère la porte qui s'ouvre sous l'action d'un ressort (18). Après utilisation et remise en place du tuyau et refermeture de la porte, celle-ci est verrouillée par l'électro-aimant et un microrupteur déclenche la restitution de la pièce.

## Description

L'invention concerne un dispositif pour ajuster la pression des pneumatiques de véhicules, comprenant un bâti fixe et une conduite déformable dont une première extrémité est fixée au bâti et reliée à une source d'air comprimé et dont la seconde extrémité est mobile et munie de moyens de raccordement à une valve de pneumatique, le bâti comportant des moyens de support pour supporter l'ensemble de la conduite dans une position de réserve, et la conduite pouvant être libérée au moins en partie des moyens de support pour amener les moyens de raccordement, dans une position d'utilisation, jusqu'aux valves des pneumatiques des roues d'un véhicule stationnant devant le dispositif.

De tels dispositifs sont notamment mis à la disposition des clients des stations de distribution de carburant. Il arrive fréquemment qu'un utilisateur d'un tel dispositif, au lieu de remettre en place sur les moyens de support la conduite, qui est généralement un tuyau souple à base de caoutchouc, la laisse étendue sur le sol. Les véhicules risquent alors de rouler dessus, ce qui entraîne à la longue une détérioration de la conduite et en particulier une mise hors d'usage rapide des moyens de raccordement.

Le but de l'invention est de remédier à cet inconvénient, et d'inciter les utilisateurs à remettre la conduite en place après usage.

A cet effet, selon l'invention, un dispositif du type défini en introduction comprend en outre :
- des moyens de barrage propres à interdire le passage de la conduite de la position de réserve à la position d'utilisation;
- des moyens de réception propres à recevoir une pièce de monnaie;
- des moyens de retenue propres à interdire la reprise d'une pièce de monnaie placée sur les moyens de réception;
- des premiers moyens de détection et de commande pour détecter la mise en place d'une pièce de monnaie sur les moyens de réception et pour désactiver les moyens de barrage et activer les moyens de retenue en réponse à cette détection; et
- des seconds moyens de détection et de commande pour détecter le retour de la conduite dans sa position de réserve et pour activer les moyens de barrage et désactiver les moyens de retenue en réponse à cette détection.

Pour pouvoir utiliser le dispositif, il faut placer une pièce de monnaie, par exemple une pièce de 10 francs, sur les moyens de réception avant de pouvoir amener la conduite dans sa position d'utilisation et par conséquent la raccorder aux valves des pneumatiques par les moyens de raccordement. Après usage, pour récupérer sa pièce, l'utilisateur doit remettre la conduite dans sa position de réserve.

Selon une caractéristique avantageuse, les moyens de barrage comprennent une paroi munie d'une ouverture que la conduite doit traverser pour passer de la position de réserve à la position d'utilisation, une porte propre à obturer l'ouverture et des premiers moyens de verrouillage pour maintenir la porte en position d'obturation, l'activation et la désactivation des moyens de barrage étant réalisées par l'activation et la désactivation des premiers moyens de verrouillage.

Cette paroi peut notamment appartenir à un boîtier propre à enfermer la conduite dans sa position de réserve.

Selon une autre caractéristique avantageuse, les moyens de réception peuvent être déplacés entre une première position dans laquelle une pièce de monnaie peut être mise en place ou retirée, et une seconde position dans laquelle la pièce ne peut être retirée, et les moyens de retenue comprennent des seconds moyens de verrouillage pour maintenir les moyens de réception dans la seconde position.

Pour l'utilisation d'un dispositif comportant ces dernières caractéristiques, la séquence des opérations est la suivante : on place la pièce sur les moyens de réception; on amène ceux-ci dans leur seconde position; on ouvre la porte; on extrait la conduite du boîtier; après usage, on remet en place la conduite dans le boîtier, et on retire la pièce des moyens de réception revenus dans leur première position.

Les moyens de réception peuvent notamment comprendre un tiroir monté sur le bâti et définissant un logement pour la pièce de monnaie, et pouvant coulisser de façon que le logement soit accessible dans la première position et inaccessible dans la seconde position.

D'autres caractéristiques optionnelles de l'invention sont énoncées ci-après :
- les premiers moyens de détection comprennent un microrupteur dont un élément mobile se déplace, pour réaliser la détection correspondante, sous la poussée de la pièce de monnaie disposée dans le logement du tiroir lorsque celui-ci est amené dans la seconde position;
- les seconds moyens de détection comprennent un microrupteur dont un élément mobile se déplace, pour réaliser la détection correspondante, sous la poussée de la porte lorsqu'elle est amenée dans la position d'obturation;
- les premiers moyens de verrouillage comprennent au moins un électro-aimant qui, lorsqu'il n'est pas alimenté, attire un élément magnétique pour empêcher un mouvement relatif entre celui-ci et l'électro-aimant;
- le dispositif comprend en outre une électrovanne interposée entre la source d'air comprimé et la conduite déformable, cette électrovanne étant ouverte en réponse à la détection par les premiers moyens de détection et fermée en réponse à la détection par les seconds moyens de détection;
- les moyens de support comprennent un tambour rotatif sur lequel la conduite est enroulée dans sa position de réserve et dont elle est au moins en partie déroulée dans sa position d'utilisation;
- le dispositif comprend des moyens de rappel sollicitant le tambour en rotation dans le sens de l'enroulement de la conduite, et des moyens de blocage unidirectionnel propres à interdire la rotation du tambour dans ledit sens tout en permettant une rotation dans le sens opposé sous l'effet d'une traction exercée sur la conduite, les moyens de blocage pouvant être neutralisés pour permettre l'enroulement de la conduite sous l'action des moyens de rappel;
- les moyens de blocage unidirectionnel comprennent une roue à rochet associée à un cliquet normalement sollicité vers les dents de la roue et pouvant être éloigné de celles-ci pour neutraliser les moyens de blocage;
- le dispositif comprend un électro-aimant pour maintenir le cliquet éloigné des dents, et un organe de commande manuel pour activer cet électro-aimant.

D'autres caractéristiques et avantages de l'invention ressortiront de la description détaillée donnée ci-après d'un exemple de réalisation, et des dessins annexés dans lesquels :
- la figure 1 est une vue de face d'un dispositif selon l'invention avec la porte fermée;
- la figure 2 est une vue de côté du dispositif avec la porte ouverte, partiellement en coupe selon la ligne II-II de la figure 3, certains éléments étant omis;
- la figure 3 est une vue en coupe selon la ligne III-III de la figure 2, certains éléments étant omis;
- la figure 4 est une vue en coupe axiale d'un mécanisme de blocage unidirectionnel appartenant au dispositif;
- la figure 5 est une vue de côté des moyens de réception; et
- la figure 6 est une vue en coupe selon la ligne VI-VI de la figure 5.

Le dispositif illustré comprend un socle en tôle métallique 1 formé essentiellement de deux plaques planes rectangulaires, une plaque horizontale inférieure 2 et une plaque verticale antérieure 3, des rebords 4 repliés à angle droit s'étendant vers le haut à partir des côtés libres de la plaque 2 et vers l'arrière à partir des côtés libres de la plaque 3. Un capot non représenté comprenant une paroi supérieure, une paroi arrière et deux parois latérales peut être monté sur le socle 1 de façon à former avec celui-ci un boîtier fermé logeant les autres éléments du dispositif qui seront décrits ci-après.

Un tambour 5 est monté sur le socle 1, par l'intermédiaire d'un châssis 6, de façon à tourner autour d'un axe horizontal parallèle à la plaque 3. Sur le tambour 5 peut s'enrouler un tuyau souple dont une extrémité est reliée à une source d'air comprimé, par l'intermédiaire d'un raccord tournant monté sur le tambour, et dont l'autre extrémité est munie de moyens de raccordement à une valve de pneumatique. Ces éléments sont connus en eux-mêmes et ne sont pas illustrés. Sur le châssis 6 est également monté un profilé 7 qui vient effleurer le bord périphérique des joues du tambour de façon à empêcher le tuyau de "déjanter".

Une ouverture 8 est ménagée à la partie inférieure de la paroi 3 pour permettre le passage du tuyau. Pour le guidage de celui-ci entre la partie inférieure du tambour et l'ouverture 8 sont prévus deux galets 9 superposés, dont les axes sont parallèles à celui du tambour, et, immédiatement en arrière de l'ouverture, un profilé 10 formant tunnel. Les galets sont montés rotatifs sur un profilé en C 9a lui-même fixé sur le chassis 6. L'ouverture 8 peut être obturée par une porte coulissante 11 comprenant une paroi plane 12 accolée à la face arrière de la plaque 3 et dont les bords latéraux sont engagés dans des glissières verticales 13 montées sur cette dernière. La porte 11 comprend également deux rebords horizontaux supérieur 14 et inférieur 15 tournés vers l'intérieur du boîtier, et un téton 16 faisant saillie vers l'extérieur à travers l'ouverture 8. Sur la face supérieure du rebord 14 est montée une patte 17 à laquelle est accrochée l'extrémité inférieure d'un ressort hélicoïdal 18, l'extrémité supérieure de ce ressort étant fixée à une patte 19 s'étendant à partir de la face intérieure de la paroi 3. Sur la face inférieure du rebord 14 est monté un disque de matériau magnétique 20a qui, dans la position inférieure d'obturation de la porte, vient en contact avec un électro-aimant 20. Dans cette même position, la face inférieure du rebord 14 vient s'appuyer sur le galet 21 d'un microrupteur 22 fixé par exemple sur l'une des glissières 13, tandis que le rebord inférieur 15 vient combler une échancrure 23 ménagée dans la plaque 2 et se raccordant à l'ouverture 8 de la plaque 3.

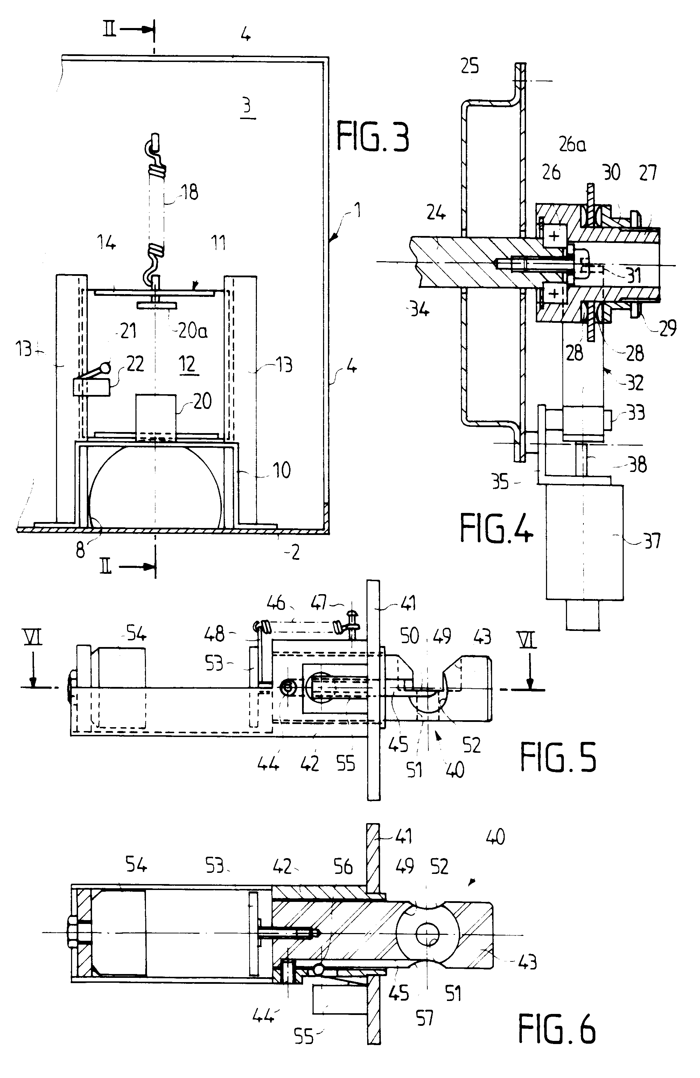

Le tambour 5 est solidaire d'un arbre 24 (figure 4) qui traverse un carter 25 fixé sur le châssis 6 et contenant un ressort spiral non représenté dont les extrémités sont reliées respectivement à l'arbre et au carter, de façon à solliciter l'arbre et par conséquent le tambour dans le sens de l'enroulement du tuyau. Sur l'extrémité libre de l'arbre 24 est montée la bague intérieure d'une roue libre 26 dont la bague extérieure est montée dans un arbre creux 27 coaxial à l'arbre 24, ces deux bagues étant solidarisées aux arbres respectifs par des moyens mécaniques classiques qu'il n'est pas nécessaire de décrire en détail. Une roue à rochet 26a est enfilée sur l'arbre 27, entre deux bagues 28 en matériau à fort coefficient de friction, l'ensemble étant serré axialement contre un épaulement de l'arbre 27 au moyen d'un écrou 29 vissé sur un filetage extérieur de celui-ci et d'une bague intermédiaire 30. Les dents de la roue à rochet 26a coopèrent avec un cliquet 31 constitué par l'extrémité d'un levier 32 articulé sur un tourillon 33 parallèle à l'axe 34 du tambour et monté sur une cornière support 35. Le levier 32 comporte un bras approximativement horizontal 36 dont le poids tend à le faire pivoter de façon à amener le cliquet 31 en prise avec la roue 26. Un électro-aimant 37 également fixé sur la cornière 35 comporte un noyau mobile 38 qui, lorsque l'électroaimant est alimenté, soulève le bras 36 de façon à dégager le cliquet.

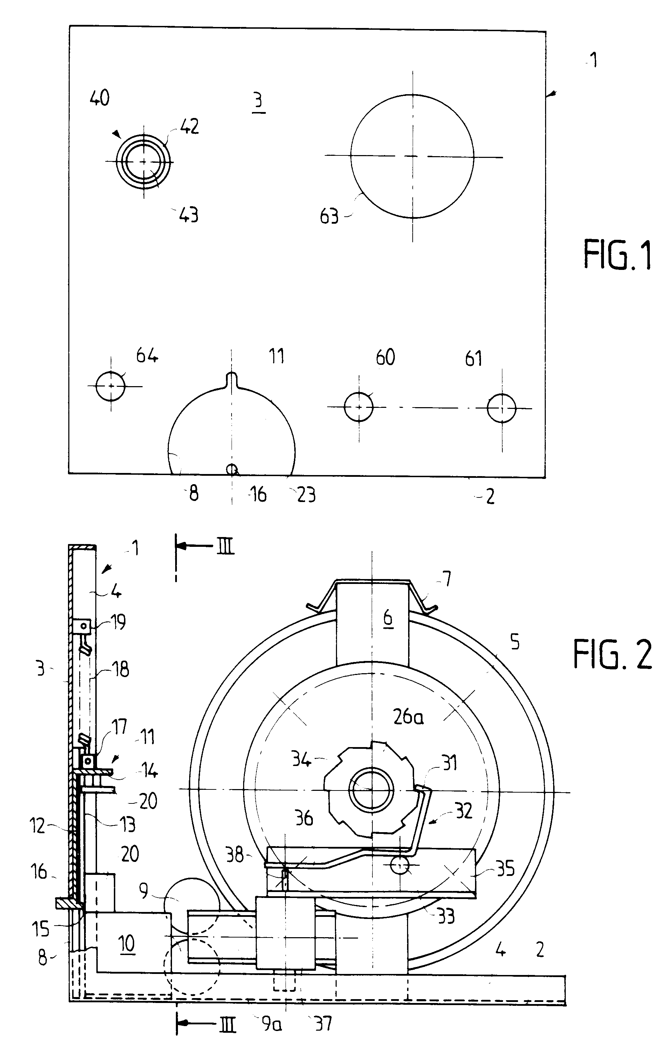

Sur la façade 3 du dispositif est monté un mécanisme de consigne à pièces de monnaie 40, non représenté aux figures 2 et 3 et illustré en détail aux figures 5 et 6. Ce mécanisme comprend une platine de montage 41, un corps 42 solidaire de la platine 41 et s'étendant vers l'intérieur du boîtier à partir de la paroi 3, et un tiroir 43 guidé dans le corps 42 de façon à pouvoir coulisser, perpendiculairement à la paroi 3, entre une position sortie, illustrée aux figures 5 et 6, dans laquelle il fait partiellement saillie hors du boîtier, et une position rentrée. Le tiroir 43 est immobilisé en rotation par une vis 44 vissée dans le corps et pénétrant dans une gorge longitudinale 45 du tiroir. Un ressort hélicoïdal 46 tendu entre un picot 47 solidaire du corps et une patte 48 montée à l'extrémité intérieure du tiroir sollicite celui-ci vers la position sortie. Dans une partie du tiroir qui est située à l'extérieur du boîtier dans la position sortie et à l'intérieur de celui-ci dans la position rentrée est ménagé un trou cylindrique 49 d'axe vertical, ouvert vers le haut et présentant un fond horizontal 50, qui peut recevoir une pièce de monnaie, par exemple de 10 francs. Ce trou 49 se prolonge, au-delà du fond 50, par un trou 51 de plus petit diamètre qui débouche vers le bas et sert à l'évacuation de l'eau qui peut tomber dans le trou 49. Le tiroir présente également des encoches latérales 52 permettant le passage de deux doigts pour la mise en place et le retrait de la pièce de monnaie. Une pastille en matériau magnétique 53, montée à l'extrémité intérieure du tiroir 43, vient en contact, dans la position rentrée de celui-ci, avec un électro-aimant 54 fixé sur le corps. Un microrupteur 55 est monté sur la platine 41 de façon que son galet 56 soit poussé par le bord d'une pièce posée au fond du trou 49 lorsque le tiroir est dans sa position rentrée.

Le fonctionnement du dispositif est le suivant.

A l'état de repos, le tuyau est enroulé sur le tambour 5, les moyens de raccordement étant placés entre les galets 9 et la porte 11 fermée, sous le tunnel 10. L'électro-aimant 20, qui est aimanté sans courant, exerce sur le disque magnétique 20a une force d'attraction verticale de haut en bas qui maintient la porte fermée. Les électro-aimants 37 et 54 ne sont ni aimantés ni alimentés, et le tiroir 43 est sorti. L'utilisateur introduit une pièce dans le logement 49 et pousse le tiroir vers l'intérieur à l'encontre du ressort 46. Le microrupteur 55 détecte la présence de la pièce et commande l'alimentation de l'électro-aimant 54, qui colle le disque 53 et empêche l'extraction du tiroir. En même temps, le microrupteur 55 commande l'alimentation électrique de l'électro-aimant 20 qui se désaimante, et la porte 11 s'ouvre sous l'action du ressort 18. Une temporisation permet à l'alimentation de l'électro-aimant d'être de nouveau coupée après un certain temps, la réaimantation qui en résulte étant sans effet sur la porte dont le disque 20a est éloigné de l'électro-aimant. Une électrovanne d'alimentation en air comprimé non représentée peut également être ouverte sous la commande du microrupteur 55. L'utilisateur peut alors saisir les moyens de raccordement et tirer pour dérouler le tuyau. La roue libre 26 permet à l'arbre 24 de tourner dans le sens du déroulement, l'arbre 27 restant immobile. Lorsque le tuyau est suffisamment déroulé pour pouvoir se brancher sur la valve d'un pneumatique, l'utilisateur cesse de tirer. Le ressort de rappel de l'arbre 24 tend à faire tourner celui-ci en sens inverse. Le couple du ressort est transmis à l'arbre 27 par la roue libre 26 et par conséquent à la roue à rochet 26a, dont une dent vient en butée sur le cliquet 31 pour empêcher le réenroulement. Sur la façade 3 du dispositif sont montés deux boutons-poussoirs 60 et 61 permettant respectivement à l'utilisateur d'augmenter la pression du pneumatique grâce à la source d'air comprimé et de diminuer cette pression par un chemin de fuite. La pression obtenue est affichée sur un cadran de manomètre 63.

En fin d'opération, l'utilisateur appuie sur un autre poussoir 64 pour alimenter l'électro-aimant 37 et libérer le cliquet 31. Le tuyau s'enroule alors sous l'action du ressort de rappel. Si l'utilisateur relâche le bouton 64 au cours du mouvement d'enroulement, la roue à rochet 26a est brusquement immobilisée et les rondelles de frottement 28 permettent un arrêt progressif de l'arbre 27 et par conséquent du tambour, évitant ainsi un choc préjudiciable. Lorsque le tuyau est entièrement rentré dans le boîtier du dispositif, l'utilisateur referme la porte en agissant sur l'ergot 16, et l'aimantation de l'électro-aimant 20 la maintient dans cette position, tandis que le microrupteur 22 provoque la désactivation de l'électro-aimant 54 qui permet au ressort 46 de faire ressortir le tiroir 43, l'utilisateur pouvant ainsi reprendre sa pièce. Le cas échéant l'électrovanne est alors refermée.

La roue libre 26a a pour fonction d'éviter que, lors du déroulement du tuyau, l'arbre 27 tourne et que par conséquent le cliquet 31 franchisse les dents de la roue à rochet 26a, produisant une usure et du bruit. Elle pourrait être supprimée sans affecter le fonctionnement du dispositif, les arbres 24 et 27 étant rendus solidaires dans les deux sens de rotation.

## Revendications

1. Dispositif pour ajuster la pression des pneumatiques de véhicules, comprenant un bâti fixe (1) et une conduite déformable dont une première extrémité est fixée au bâti et reliée à une source d'air comprimé et dont la seconde extrémité est mobile et munie de moyens de raccordement à une valve de pneumatique, le bâti comportant des moyens de support (5) pour supporter l'ensemble de la conduite dans une position de réserve, et la conduite pouvant être libérée au moins en partie des moyens de support pour amener les moyens de raccordement, dans une position d'utilisation, jusqu'aux valves des pneumatiques des roues d'un véhicule stationnant devant le dispositif, caractérisé en ce qu'il comprend en outre :
- des moyens de barrage (11) propres à interdire le passage de la conduite de la position de réserve à la position d'utilisation;
- des moyens de réception (43) propres à recevoir une pièce de monnaie;
- des moyens de retenue (53,54) propres à interdire la reprise d'une pièce de monnaie placée sur les moyens de réception;
- des premiers moyens de détection et de commande (55) pour détecter la mise en place d'une pièce de monnaie sur les moyens de réception et pour désactiver les moyens de barrage et activer les moyens de retenue en réponse à cette détection; et
- des seconds moyens de détection et de commande (22) pour détecter le retour de la conduite dans sa position de réserve et pour activer les moyens de barrage et désactiver les moyens de retenue en réponse à cette détection.

2. Dispositif selon la revendication 1, caractérisé en ce que les moyens de barrage comprennent une paroi (3) munie d'une ouverture (8) que la conduite doit traverser pour passer de la position de réserve à la position d'utilisation, une porte (11) propre à obturer l'ouverture et des premiers moyens de verrouillage (20,20a) pour maintenir la porte en position d'obturation, l'activation et la désactivation des moyens de barrage étant réalisées par l'activation et la désactivation des premiers moyens de verrouillage.

3. Dispositif selon la revendication 2, caractérisé en ce que ladite paroi appartient à un boîtier propre à enfermer la conduite dans sa position de réserve.

4. Dispositif selon l'une des revendications précédentes, caractérisé en ce que les moyens de réception peuvent être déplacés entre une première position dans laquelle une pièce de monnaie peut être mise en place ou retirée et une seconde position dans laquelle la pièce ne peut être retirée, et que les moyens de retenue comprennent des seconds moyens de verrouillage (53,54) pour maintenir les moyens de réception dans la seconde position.

5. Dispositif selon la revendication 4, caractérisé en ce que les moyens de réception comprennent un tiroir (43) monté sur le bâti et définissant un logement (49) pour la pièce de monnaie, et pouvant coulisser de façon que le logement soit accessible dans la premère position et inaccessible dans la seconde position.

6. Dispositif selon la revendication 5, caractérisé en ce que les premiers moyens de détection comprennent un microrupteur (55) dont un élément mobile se déplace, pour réaliser la détection correspondante, sous la poussée de la pièce de monnaie disposée dans le logement du tiroir lorsque celui-ci est amené dans la seconde position.

7. Dispositif selon l'une des revendications 2 à 6, caractérisé en ce que les seconds moyens de détection comprennent un microrupteur (22) dont un élément mobile se déplace, pour réaliser la détection correspondante, sous la poussée de la porte lorsqu'elle est amenée dans la position d'obturation.

8. Dispositif selon l'une des revendications 2 à 7, caractérisé en ce que les premiers moyens de verrouillage comprennent au moins un électro-aimant (54) qui, lorsqu'il n'est pas alimenté, attire un élément magnétique (28a, 53) pour empêcher un mouvement relatif entre celui-ci et l'électro-aimant.

9. Dispositif selon l'une des revendications précédentes, caractérisé en ce qu'il comprend en outre une électrovanne interposée entre la source d'air comprimé et la conduite déformable, cette électrovanne étant ouverte en réponse à la détection par les premiers moyens de détection et fermée en réponse à la détection par les seconds moyens de détection.

10. Dispositif selon l'une des revendications précédentes, caractérisé en ce que les moyens de suport comprennent un tambour rotatif (5) sur lequel la conduite est enroulée dans sa position de réserve et dont elle est au moins en partie déroulée dans sa position d'utilisation.

11. Dispositif selon la revendication 10, caractérisé en ce qu'il comprend des moyens de rappel sollicitant le tambour en rotation dans le sens de l'enroulement de la conduite, et des moyens de blocage unidirectionnel (26, 26a, 31) propres à interdire la rotation du tambour dans ledit sens tout en permettant une rotation dans le sens opposé sous l'effet d'une traction exercée sur la conduite, les moyens de blocage pouvant être neutralisés pour permettre l'enroulement de la conduite sous l'action des moyens de rappel.

12. Dispositif selon la revendication 11, caractérisé en ce que les moyens de blocage unidirectionnel comprennent une roue à rochet (26) associée à un cliquet (31) normalement sollicité vers les dents de la roue et pouvant être éloigné de celles-ci pour neutraliser les moyens de blocage.

13. Dispositif selon la revendication 12, caractérisé en ce qu'il comprend un électro-aimant (37) pour maintenir le cliquet éloigné des dents, et un organe de commande manuel (64) pour activer cet électro-aimant.
